# FASCICULE DE BREVET EUROPEEN

(11) **EP 0 395 497 B1**
(45) Date de publication et mention de la délivrance du brevet: **24.02.1993**
(21) Numéro de dépôt: 90401107.9
(22) Date de dépôt: 25.04.1990
(51) Int. Cl.: F02K 3/072, F02C 3/067

(54) **Moteur à soufflantes contrarotatives tractrices**
Gegenläufiges Bläsertriebwerk
Counter rotating prop-fan engine

(30) Priorité: 26.04.1989 FR 8905516
(43) Date de publication de la demande: 31.10.1990
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Lardellier, Alain Marie Joseph, F-77000 Melun (FR)
(74) Mandataire: Moinat, François

(56) Documents cités:
- EP-A- 0 244 515
- DE-B- 1 233 210
- FR-A- 2 606 081
- GB-A- 585 342
- GB-A- 586 554
- GB-A- 603 283
- US-A- 2 430 399

## Description

La présente invention concerne un moteur à turbine à gaz, destiné à la propulsion d'un avion, du genre comportant un générateur de gaz qui alimente deux turbines de travail lentes contrarotatives, imbriquées.

FR-A-2 535 394 décrit un moteur à turbine à gaz de ce type dans lequel les turbines de travail sont disposées en aval du générateur de gaz et sont entraînées directement par les gaz chauds sortant dudit générateur. Lesdites turbines entraînent directement sans réducteur, soit deux étages d'hélices contrarotatives, soit deux étages de soufflantes carénées par lesquelles est assurée la propulsion. Deux solutions de montage sont proposées. L'une prévoît de disposer les hélices ou les soufflantes à l'arrière du moteur, ce qui présente des inconvénients et des difficultés lors d'un montage sous les ailes d'un avion. L'autre prévoît de les disposer à l'avant du moteur, ce qui impose, pour l'entraînement, des arbres de liaison de grande longueur dont la mise en place comporte également des inconvénients.

FR-A-2 560 642 décrit un moteur à turbine à gaz du même type dans lequel un compresseur de gavage à contrarotation est associé aux soufflantes avant contrarotatives. Un dispositif de réglage du pas des aubes d'un étage de soufflante est adjoint, permettant d'obtenir une inversion du flux.

FR-A-2 606 081 au nom de la demanderesse décrit une autre solution de moteur du même type comportant un générateur de gaz dans lequel les gaz circulent de l'arrière vers l'avant par rapport au sens de déplacement de l'avion et alimentent, après une inversion de sens, deux turbines de travail contrarotatives entraînant directement deux étages d'hélices contrarotatives. Le générateur de gaz est alimenté par une manche d'entrée d'air composée d'une multiplicité de canaux disposés circonférentiellement autour de l'enveloppe externe du moteur et l'échappement des gaz à la sortie des turbines de travail s'effectue par une multiplicité de canaux intercalés entre les canaux d'entrée.

Si cette solution permet de réaliser un moteur à soufflantes contrarotatives tractrices avec un porte-à-faux en avant de l'aile de l'avion plus réduit que les solutions antérieures ne le permettaient, il n'en reste pas moins que la réalisation de la manche d'entrée d'air et les sorties de flux en aval des turbines lentes sont assez complexes à réaliser.

La présente invention a pour but de réaliser un moteur à soufflantes tractrices du genre du précédent (avec inversion de sens du flux) qui permette une entrée d'air frontale dans le compresseur basse pression du générateur de gaz.

L'invention a également pour but de réaliser un moteur à soufflantes tractrices plus compact que les précédentes et de conception plus simple, de montage plus aisé et comportant notamment des arbres de turbine de plus faible longueur, donc moins sensibles aux vibrations.

L'invention a également pour but de permettre la réalisation d'un propulseur, qui par sa plus grande simplicité sera plus léger que les moteurs de l'état actuel de la technique tout en possédant les avantages des solutions à soufflantes contrarotatives en matière de consommation spécifique.

L'invention s'applique donc à un moteur à turbine à gaz destiné à la propulsion d'un avion, du genre comportant un générateur de gaz qui alimente deux turbines lentes contrarotatives imbriquées, elles-mêmes entraînant deux soufflantes contrarotatives dites tractrices, disposées en amont du moteur, ledit générateur de gaz comportant un compresseur basse pression suivi d'un compresseur haute pression délivrant de l'air comprimé à une chambre de combustion dans laquelle l'air est carburé et brûlé pour fournir de l'énergie à une turbine haute pression suivie d'une turbine basse pression et des deux turbines lentes.

Selon l'invention, les gaz circulent de l'amont vers l'aval dans le compresseur basse pression, ledit compresseur basse pression et les soufflantes comportant une entrée d'air frontale, puis de l'aval vers l'amont dans le compresseur haute pression, la chambre et les turbines HP et BP, puis à nouveau de l'amont vers l'aval dans les turbines libres avant d'être éjectés dans le flux froid issu des soufflantes contrarotatives.

Selon une caractéristique de l'invention, le compresseur basse pression est constitué de deux ensembles d'étages de rotors contrarotatifs, un premier ensemble étant porté par un arbre de turbine central, et entraîné par la turbine basse pression du générateur de gaz tandis que le second ensemble d'étages de rotor est solidaire de la soufflante amont, lesdits second ensemble de rotor de compresseur BP et ladite soufflante amont étant reliés par un tambour à la première turbine lente radialement interne qui les entraîne en rotation.

D'autres caractéristiques du moteur selon l'invention et sa description détaillée seront indiquées plus loin en regard des planches annexées parmi lesquelles :

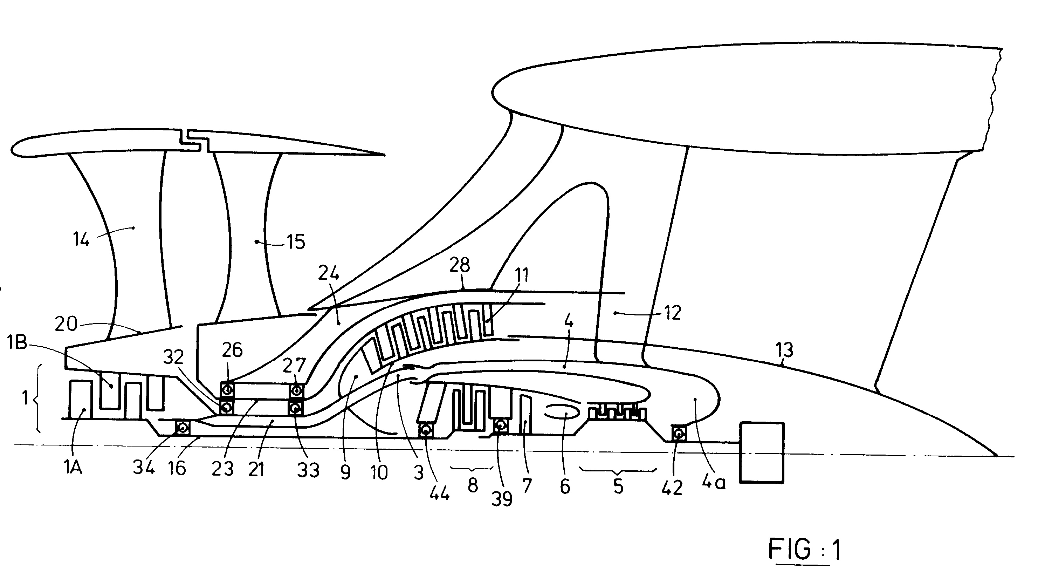

- la figure 1 est un schéma simplifié du principe de réalisation du moteur selon l'invention en demi-coupe longitudinale.
   Sur cette figure, les compresseurs et turbines sont schématisés sans que le nombre d'étages représenté pour chacun soit caractéristique de la structure réelle du moteur. Ainsi le compresseur BP est simplifié ici à deux étages tandis que le mode réel pourra en comporter cinq.
- la figure 2 est une vue en demi-coupe longitudinale d'un mode de réalisation préférentiel du moteur selon la figure 1.

Le moteur sera décrit ci-dessous en regard des deux figures annexées.

De façon globale le générateur de gaz comporte un compresseur axial basse pression 1 à entrée d'air 2 frontale suivi d'une veine annulaire comportant une partie amont 3 mobile en rotation et une partie aval fixe 4 dans lesquelles l'air comprimé circule de l'amont vers l'aval. La veine aval fixe 4 comporte à son extrémité aval un coude 4a à partir duquel le flux change de sens pour entrer dans le compresseur haute pression 5 puis dans la chambre de combustion 6, où l'air comprimé est carburé, les gaz de combustion étant détendus dans la turbine haute pression 7 puis dans la turbine basse pression 8.

Dans tout le corps haute pression 5, 6, 7, 8 le flux circule de l'arrière vers l'avant du moteur en sortie de la turbine basse-pression le flux change à nouveau de sens dans une structure tournante coudée 9 et pénètre de l'avant vers l'arrière dans deux turbines libres contrarotatives, l'une 10 radialement interne et l'autre 11 radialement externe imbriquées l'une dans l'autre.

En sortie des turbine lentes 10 et 11, le flux est éjecté vers l'aval dans un plan d'éjection 12 situé longitudinalement au niveau du compresseur haute pression 5 et forme une sortie annulaire autour d'un corps central arrière fixe 13.

Les turbines libres 10 et 11, à cinq étages chacune (ceci n'étant qu'un exemple) entraînent respectivement une soufflante amont 14 et une soufflante aval 15 situées à l'amont du moteur, la première 14 au niveau du compresseur BP, 1, qu'elle entoure tandis que la seconde, 15, est disposée à un niveau longitudinal situé entre le compresseur BP 1 et la structure tournante coudée 9.

Le compresseur BP 1 est formé de deux ensembles 1A, 1B d'étages de rotors contrarotatifs. Le premier ensemble rotorique 1A est radialement interne à l'ensemble 1B et il est porté par un arbre de turbine 16 central et entraîné par la turbine basse pression 8 du générateur de gaz.

Le second ensemble rotorique 1B du compresseur BP est solidaire de la soufflante amont 14 et de la première turbine lente 10 radialement interne qui les entraîne en rotation.

Pour ce faire, les étages 1B du compresseur sont portés par une virole 17 boulonnée à l'amont en 18 sur le bec amont 19 solidaire du disque 20 de la soufflante amont 14.

L'aval de la virole 17 est lié à la turbine lente 10 par un tambour 21. Celui-ci comporte une paroi interne 21a de forme sensiblement tubulaire reliée par des parois cloisons radiales 21b à une paroi externe 21c qui l'entoure pour former en aval du compresseur basse pression une veine pour l'air comprimé issu du compresseur BP1 et apte à diriger cet air vers le compresseur HP 5.

Ainsi, la soufflante amont 14, le bec de séparation 19, l'ensemble rotorique externe 1B du compresseur BP 1, et le tambour 21 forment avec la veine annulaire 3 et la turbine libre interne 10 un ensemble tournant commun. La disposition des paliers de rotation sera indiquée plus loin.

La soufflante aval 15 est boulonnée en 22 à un arbre 23 entourant le tambour 21 de la soufflante amont 14, l'arbre 23 étant solidaire à son aval, de la seconde turbine lente 11 disposée radialement à l'extérieur de la première turbine lente 10.

Les parties fixes du moteur sont constituées par une structure fixe amont 24 comportant une virole interne 25 placée radialement sous la soufflante aval et comportant deux paliers 26, 27 de rotation de l'arbre 23 de soufflante aval. La structure 24 comporte des bras raidisseurs radiaux supportant le carter externe 28 du moteur, lequel carter s'étend de l'aval du disque de soufflante aval jusqu'au plan transversal 12 d'éjection des gaz hors des turbines libres.

Les parties fixes comportent également un corps central arrière 13 s'étendant de l'aval de la turbine 10 et comportant radialement, de l'extérieur vers l'intérieur, une virole formant un cône arrière 29 pour l'évacuation des gaz issus des soufflantes 14, 15 et des turbines lentes 10, 11, une virole double 30, 31 munie d'un coude aval 4a et formant la veine 4 amont-aval intermédiaire entre le tambour tournant 3 et le compresseur haute pression 5 ; le corps central arrière 13 contient le générateur de gaz dont on rappelle qu'il comprend de l'arrière vers l'avant le compresseur HP 5, la chambre de combustion 6 et les turbines HP 7 et BP 8, la turbine BP 8 étant liée par l'arbre de turbine BP central 16 au premier ensemble 1A de rotor du compresseur BP 1.

Le tambour 21 de la soufflante amont 14 est monté tournant d'une part à l'intérieur de l'arbre 23 de soufflante aval au moyen de deux paliers 32, 33 disposés entre l'arbre et la paroi externe 21c du tambour, et d'autre part sur l'arbre central 16 de la turbine BP au moyen d'un palier amont 34 placé entre l'arbre central et la paroi interne 21a du tambour 21.

Si l'on détaille maintenant le corps haute pression du générateur de gaz, celui-ci comporte à l'arrière le compresseur HP 5 lié par un arbre central 35 à la turbine HP 7 placée en amont et à l'entrée du compresseur HP 5 il comporte un tourillon arrière 36 prolongé vers l'aval et muni d'un engrenage 37 entraînant les pignons d'un support 38 d'équipements, ledit support étant disposé à l'intérieur du cône aval 29.

Le corps HP est centré à l'amont sur un palier 39 disposé entre un élément structural amont 40 du corps central 13 et un tourillon amont 41 et à l'aval sur un palier 42 disposé entre un élément structural aval 43 du corps central et le tourillon arrière 36.

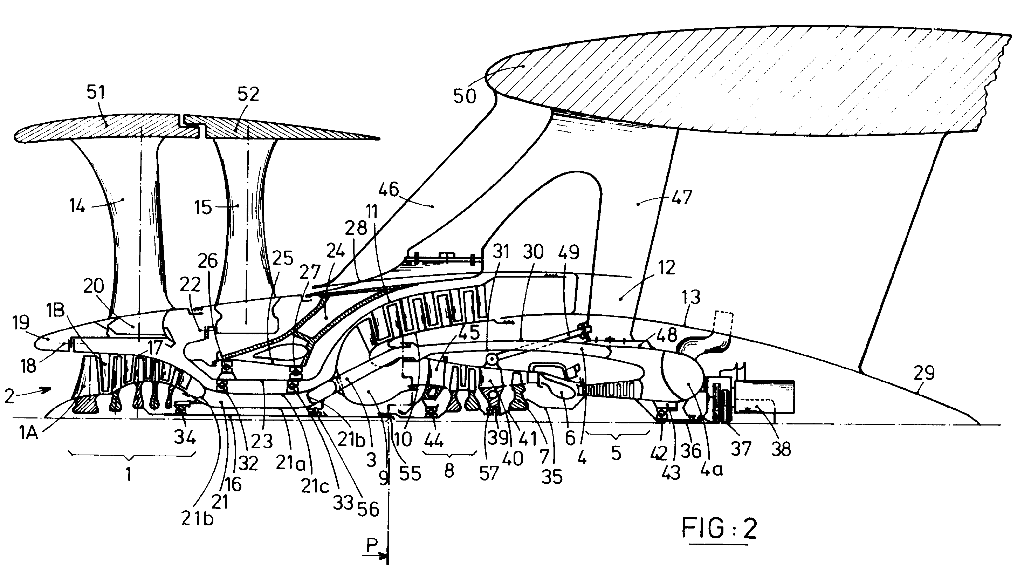

L'arbre 16 de turbine BP, quant à lui, peut être monté tournant, en avant sur le palier 34 déjà indiqué porté intérieurement par le tambour 21 de la soufflante amont, et, en arrière, sur un palier 44 porté par un élément structural 45 du corps central 13. La variante représentée à la figure 2 permettant un démontage plus aisé à l'aide d'une cannelure 55 coulissante est composée de deux parties, la partie amont de l'arbre montée sur le palier 34 et un palier 56 solidaire du tambour 21 et la partie aval montée sur le palier 44 et le palier 57 solidaire de la structure 45. Dans ce cas le générateur de gaz (turbine BP, turbine HP, chambre et compresseur HP) peut facilement être séparé de la partie amont (soufflantes, compresseur BP et turbines libres) au niveau des labyrinthes contenus dans le plan P.

Le moteur est suspendu à un double mât 46, 47 de suspension accroché à l'amont sur la partie radialement externe de la structure fixe amont 24 et à l'aval sur une partie renforcée 48 de la virole 30 tandis que des bras raidisseurs 49 assurent le maintien de l'élément structural 40.

Un tel moteur peut être suspendu avec un porte-à-faux relativement faible sous l'aile 50 d'un avion de telle sorte que les soufflantes 14 et 15 soient disposées en amont du bord d'attaque de l'aile.

De façon préférentielle les soufflantes 24, 25 comportent des carénages annulaires externes 51, 52 délimitant le bord externe du flux secondaire. Dans ce cas, le bord de fuite du carénage 52 de la soufflante aval 15 est situé dans un plan situé en amont du bord d'attaque de l'aile 50 de l'avion et le moteur est suspendu à une hauteur telle que les carénages 51, 52 des soufflantes soit situé sous le point le plus bas de l'intrados de l'aile de l'avion.

Dans ce type de réalisation à soufflantes carénées, l'ensemble formé par le carénage 51 ou 52, les aubes des soufflantes 14 ou 15 et le disque de soufflante peut constituer un ensemble monobloc réalisé en matériau composite. Ceci est rendu possible par le fait que, pour des applications à des moteurs à très grand taux de dilution, la vitesse périphérique de la carène est relativement faible de l'ordre de 220 m/s, ce qui autorise l'utilisation de matériaux composites avec la réduction potentielle de masse qui en résulte par rapport aux moteurs existant à ce jour.

## Revendications

1. Moteur à turbine à gaz destiné à la propulsion d'un avion, du genre comportant un générateur de gaz qui alimente deux turbines lentes contrarotatives imbriquées (10, 11) elles-mêmes entraînant deux soufflantes (14, 15) contrarotatives dites tractrices, disposées en amont du moteur, ledit générateur de gaz comportant un compresseur basse pression (1) suivi d'un compresseur haute pression (5) délivrant de l'air comprimé à une chambre de combustion (6) dans laquelle l'air est carburé et brûlé pour fournir de l'énergie à une turbine haute pression (7) suivie d'une turbine basse pression (8) et des deux turbines lentes (10, 11), moteur caractérisé en ce que les gaz circulent de l'amont vers l'aval dans le compresseur BP (1), ledit compresseur BP(1) et les soufflantes (14, 15) comportant une entrée d'air frontale, puis de l'aval vers l'amont dans le compresseur HP (5), la chambre (6) et les turbines HP et BP (7, 8), puis à nouveau de l'amont vers l'aval dans les turbines libres (10, 11) avant d'être éjectées dans le flux froid issu des soufflantes contrarotatives (14, 15).

2. Moteur selon la revendication 1 caractérisé en ce que le compresseur basse pression (1) est constitué de deux ensembles d'étages (1A, 1B) de rotors contrarotatifs, un premier ensemble (1A) étant porté par un arbre de turbine central (16) et entraîné par la turbine basse pression (8) du générateur de gaz tandis que le second ensemble d'étages de rotor (1B) est solidaire de la soufflante amont (14), lesdits second ensembles de rotor (1B) de compresseur BP et ladite soufflante amont (14) étant reliés par un tambour (21) à la première turbine lente (10) radialement interne qui les entraîne en rotation.

3. Moteur selon la revendication 2 caractérisé en ce que le tambour (21) comporte une paroi interne (21a) de forme sensiblement tubulaire reliée par des cloisons radiales (21b) à une paroi externe (21c) qui l'entoure pour former en aval du compresseur basse pression (1) une veine (3) pour l'air comprimé issu du compresseur BP (1) et apte à diriger cet air vers le compresseur HP (5).

4. Moteur selon l'une des revendications 2 ou 3, caractérisé en ce que la soufflante aval (15) est liée à un arbre (23) entourant le tambour (21) de la soufflante amont, ledit arbre (23) étant solidaire en aval de la seconde turbine lente (11) disposée radialement à l'extérieur de la première turbine lente (10).

5. Moteur selon la revendication 3, caractérisé en ce que l'arbre (23) de soufflante aval est monté tournant à l'intérieur d'une structure fixe amont (24) du moteur au moyen de deux paliers l'un amont (26), l'autre aval (27) disposés entre ledit arbre de soufflante aval et ladite structure fixe (24).

6. Moteur selon l'une des revendications 4 ou 5, caractérisé en ce que le tambour (21) de la soufflante amont (14) est monté tournant d'une part à l'intérieur de l'arbre (23) de soufflante aval au moyen de deux paliers (32, 33) disposés entre l'arbre et la paroi externe (21c) du tambour, et d'autre part sur l'arbre central (16) de turbine BP au moyen d'un palier amont (34) placé entre l'arbre central et la paroi interne (21a) du tambour (21).

7. Moteur selon l'une quelconque des revendications 1 à 6 caractérisé en ce qu'il comporte un corps central arrière comportant radialement de l'extérieur vers l'intérieur une virole formant un cône arrière (29) pour l'évacuation des gaz issus des soufflantes (14, 15) et des turbines lentes (10, 11), une virole double (30, 31) munie d'un coude aval (4a) et formant la veine (4) amont-aval intermédiaire entre le tambour (21) et le compresseur haute pression (5), et contenant le générateur de gaz comprenant de l'arrière vers l'avant le compresseur HP (5), la chambre de combustion (6) et les turbines HP (7) et BP (8), la turbine BP étant liée par l'arbre de turbine BP central (16) du premier ensemble (1A) de rotor du compresseur BP.

8. Moteur selon la revendication 7, caractérisé en ce que le corps HP comporte à l'arrière le compresseur HP (5) lié par un arbre central (35) à la turbine HP (7) placée en amont, et en ce que, à l'entrée du compresseur HP (5) il comporte un tourillon arrière (36) prolongé vers l'aval et muni d'un engrenage (37) entraînant les pignons d'un support (38) d'équipements, ledit support étant disposé à l'intérieur du cône aval (29).

9. Moteur selon la revendication 8, caractérisé en ce que le corps HP est centré à l'amont sur un palier (39) disposé entre un élément structural amont (40) du corps central (13) et un tourillon amont (41) et à l'aval sur un palier (42) disposé entre un élément structural aval (43) du corps central et le tourillon arrière (36).

10. Moteur selon l'une quelconque des revendications 5 à 9, caractérisé en ce que la structure fixe amont (24) et le corps central arrière sont solidaires entre eux par une virole externe (28) et sont liés par un double mât (46, 47) de suspension à l'aile (50) d'un avion.

11. Moteur selon la revendication 10 suspendu à l'aile (50) d'un avion caractérisé en ce que il est suspendu en porte-à-faux sous l'aile, les soufflantes (14, 15) étant disposées en amont de l'aile de l'avion.

12. Moteur selon la revendication 11, caractérisé en ce que les soufflantes (14, 15) sont carénées.

13. Moteur selon la revendication 12, caractérisé en ce que le bord de fuite du carénage (52) de la soufflante aval (15) est situé dans un plan situé en amont du bord d'attaque de l'aile (50) de l'avion et en ce que le moteur est suspendu à une hauteur telle que le carénage des soufflantes soit situé sous le point le plus bas de l'intrados de l'aile de l'avion.

## Patentansprüche

1. Gasturbinenmotor für den Antrieb eines Luftfahrzeugs mit einem Gasgenerator, der zwei miteinander verschachtelte langsame gegenläufige Turbinen (10, 11) speist, die ihrerseits zwei gegenläufige, als Schleppbläser bezeichnete Bläser (14, 15) antreiben, die stromaufwärts des Motors angeordnet sind, wobei der Gasgenerator einen Niederdruckverdichter (1) aufweist, auf den ein Hochdruckverdichter (5) folgt, der komprimierte Luft in eine Brennkammer (6) liefert, in der die Luft mit Kraftstoff versehen und verbrannt wird, um Energie an eine Hochdruckturbine (7) zu liefern, auf die eine Niederdruckturbine (8) und die beiden langsamen Turbinen (10, 11) folgen, wobei der Motor dadurch gekennzeichnet ist, daß die Gase von der stromaufwärtigen zur stromabwärtigen Seite durch den Niederdruckverdichter (1) zirkulieren, wobei der Niederdruckverdichter (1) und die Bläser (14, 15) einen frontalen Lufteinlaß besitzen, daß die Gase dann von der stromabwärtigen zur stromaufwärtigen Seite durch den Hochdruckverdichter (5), die Brennkammer (6), die Hochdruckturbine (7) und die Niederdruckturbine (8) und dann von neuem von der stromaufwärtigen zur stromabwärtigen Seite durch die freien Turbinen (10, 11) zirkulieren, bevor sie in den von den gegenläufigen Bläsern (14, 15) abgegebenen kalten Luftstrom ausgeworfen werden.

2. Motor nach Anspruch 1, dadurch gekennzeichnet, daß der Niederdruckverdichter (1) aus zwei Gruppen von gegenläufigen Rotorstufen (1A, 1B) besteht, wobei eine erste Gruppe (1A) von einer zentralen Turbinenwelle (16) getragen und von der Niederdruckturbine (8) des Gasgenerators angetrieben wird, während die zweite Gruppe (1B) von Rotorstufen fest mit dem stromaufwärtigen Bläser (14) verbunden ist, wobei die zweite Gruppe (1B) von Rotorstufen und der stromaufwärtige Bläser (14) durch eine Trommel (21) mit der ersten langsamen, radial innen liegenden Turbine (10) verbunden ist, die sie zu einer Drehbewegung antreibt.

3. Motor nach Anspruch 2, dadurch gekennzeichnet, daß die Trommel (21) eine im wesentlichen rohrförmige Innenwandung (21a) besitzt, die über radiale Trennwände (21b) mit einer Außenwand (21c) verbunden ist, die sie umschließt, um stromabwärts des Niederdruckverdichters (1) einen Kanal (3) für von dem Niederdruckverdichter (1) abgegebene komprimierte Luft zu bilden, der diese Luft zu dem Hochdruckverdichter (5) leiten kann.

4. Motor nach einem der Ansprüche 2 oder 3, dadurch gekennzeichnet, daß der stromabwärtige Bläser (15) mit einer die Trommel (21) des stromaufwärtigen Bläsers umschließenden Welle (23) verbunden ist, die auf der stromabwärtigen Seite mit der zweiten langsamen Turbine (11) fest verbunden ist, die radial außerhalb der ersten langsamen Turbine (10) angeordnet ist.

5. Motor nach Anspruch 3, dadurch gekennzeichnet, daß die Welle (23) des stromabwärtigen Bläsers mit Hilfe zweier zwischen der genannten Welle des stromabwärtigen Bläsers und der festen Struktur angeordneter Lager, nämlich eines stromaufwärtigen Lagers (26) und eines stromabwärtigen Lagers (27), drehbar in einer festen stromaufwärtigen Struktur (24) des Motors montiert ist.

6. Motor nach einem der Ansprüche 4 oder 5, dadurch gekennzeichnet, daß die Trommel (21) des stromaufwärtigen Bläsers (14) einerseits mit Hilfe zweier zwischen der Welle und der Außenwand (21c) der Trommel angeordneter Lager (32, 33) im Innern der Welle (23) des stromabwärtigen Bläsers und andererseits mit Hilfe eines zwischen der zentralen Welle (16) und der Innenwand (21a) der Trommel (21) angeordneten stromaufwärtigen Lagers (34) auf der zentralen Welle (16) der Niederdruckturbine drehbar montiert ist.

7. Motor nach einem der Ansprüche 1 bis 6, dadurch gekennzeichnet, daß er einen hinteren zentralen Körper besitzt, der in radialer Richtung von außen nach innen aufweist: einen Mantel, der einen hinteren Konus (29) zur Abführung der von den Bläsern (14, 15) und den langsamen Turbinen (10, 11) abgegebenen Gase bildet, einen Doppelmantel (30, 31), der mit einem stromabwärtigen Kürmmer (4a) ausgestattet ist und den von der stromaufwärtigen zur stromabwärtigen Seite verlaufenden Kanal (4) zwischen der Trommel (21) und dem Hochdruckverdichter (5) bildet und den Gasgenerator enthält, der von hinten nach vorn aufweist: den Hochdruckverdichter (5), die Brennkammer (6) und die Hochdruck- und Niederdruckturbinen (7 und 8), wobei die Niederdruckturbine durch die zentrale Niederdruckturbinenwelle (16) der ersten Rotorgruppe (1A) des Niederdruckverdichters verbunden ist.

8. Motor nach Anspruch 7, dadurch gekennzeichnet, daß der Hochdruckkörper an seiner hinteren Seite den Hochdruckverdichter (5) aufweist, der über eine zentrale Welle (35) mit der stromaufwärts angeordneten Hochdruckturbine (7) verbunden ist, und daß er am Eingang des Hochdruckverdichters (5) einen hinteren Zapfen (36) aufweist, der zur stromabwärtigen Seite hin verlängert ist und mit einem Zahnradgetriebe (37) ausgestattet ist, das mit den Ritzeln eines Ausrüstungsträgers in Eingriff steht, der im Innern des stromabwärtigen Konus (29) angeordnet ist.

9. Motor nach Anspruch 8, dadurch gekennzeichnet, daß der Hochdruckkörper stromaufwärts auf einem zwischen einem stromaufwärtigen Strukturelement (40) des zentralen Körpers (13) und einem stromaufwärtigen Zapfen (41) angeordneten Lager (39) und auf seiner stromabwärtigen Seite auf einem zwischen einem stromabwärtigen Strukturelement (43) des zentralen Körpers (13) und dem hinteren Zapfen (36) angeordneten Lager (42) zentriert ist.

10. Motor nach einem der Ansprüche 5 bis 9, dadurch gekennzeichnet, daß die feste stromaufwärtige Struktur (24) und der zentrale hintere Körper durch einen Außenmantel (28) fest miteinander und durch einen doppelten Aufhängungsstiel (46, 47) mit der Tragfläche (50) eines Luftfahrzeugs verbunden sind.

11. Motor nach Anspruch 10, der an der Tragfläche (50) eines Luftfahrzeugs aufgehängt ist, dadurch gekennzeichnet, daß er freitragend unter der Tragfläche aufgehängt ist und daß die Bläser (14, 15) stromaufwärts der Tragfläche des Luftfahrzeugs angeordnet sind.

12. Motor nach Anspruch 11, dadurch gekennzeichnet, daß die Bläser (14, 15) stromlinienförmig ausgebildet sind.

13. Motor nach Anspruch 12, dadurch gekennzeichnet, daß der hintere Rand der stromlinienförmigen Verkleidung (52) des stromabwärtigen Bläsers (15) in einer Ebene liegt, die sich stromaufwärts des vorderen Randes der Tragfläche (50) des Luftfahrzeugs befindet, und daß der Motor in einer solchen Höhe aufgehängt ist, daß die stromlinienförmige Verkleidung der Bläser unter dem tiefsten Punkt der Wölbungsinnenseite der Tragfläche (50) des Luftfahrzeugs liegt.

## Claims

1. Gas turbine engine intended for the propulsion of an aircraft, of the type comprising a gas generator which supplies two slow-speed counter-rotating imbricated turbines (10, 11) themselves driving two counter-rotating fans (14, 15) called propulsive fans, placed upstream of the engine, the said gas generator comprising a low-pressure compressor (1) followed by a high-pressure compressor (5) delivering compressed air to a combustion chamber (6) in which the air is mixed with fuel and burned to supply energy to a high-pressure turbine (7) followed by a low-pressure turbine (8) and by two slow-speed turbines (10, 11), engine characterised in that the gases circulate from the front to the rear in the LP compressor (1), the said LP compressor (1) and the fans (14, 15) comprising a forward-facing air intake, then from the rear to the front in the HP compressor (5), the chamber (6) and the HP and LP turbines (7, 8), then once more from the front to the rear in the free turbines (10, 11), before being ejected into the cold air flow coming from the counter-rotating fans (14, 15).

2. Engine in accordance with Claim 1 characterised in that the low-pressure compressor (1) is made up of two sets (1A, 1B) of counter-rotating stages of rotors, a first set (1A) being carried on a central turbine shaft (16) and driven by the low-pressure turbine (8) of the gas generator whilst the second set of rotor stages (1B) is attached to the upstream fan (14), the said second set of rotors (1B) of the LP compressor and the said upstream fan (14) being coupled by a drum (21) to the first radially inner, slow-speed turbine (10) which drives them in rotation.

3. Engine in accordance with Claim 2 characterised in that the drum (21) comprises an inner wall (21 a) of a generally tubular shape connected by radial webs (21b) to an outer wall (21c) which surrounds it to form downstream of the low-pressure compressor (1) a duct (3) for the compressed air emerging from the LP compressor (1) and capable of directing this air to the HP compressor (5).

4. Engine in accordance with Claims 2 or 3, characterised in that the downstream fan (15) is coupled to a shaft (23) surrounding the drum (21) of the upstream fan, the said shaft (23) being attached, downstream, to the second slow-speed turbine (11) placed radially outside the first slow-speed turbine (10).

5. Engine in accordance with Claim 3, characterised in that the drum (21) of the upstream fan (14) is assembled so as to rotate inside a stationary upstream structure (24) of the engine by means of two bearings, one upstream (26) and the other downstream (27) placed between the said downstream fan shaft and the said stationary structure (24).

6. Engine in accordance with either of Claims 4 or 5, characterised in that the drum (21) of the upstream fan (14) is assembled so as to rotate on the one hand inside the downstream fan shaft (23) by means of two bearings (32, 33) placed between the shaft and the outer wall (21c) of the drum and, on the other, on the central shaft (16) of the LP turbine by means of an upstream bearing (34) placed between the central shaft and the inner wall (21a) of the drum (21).

7. Engine in accordance with any of Claims 1 to 6, characterised in that it comprises a rear central body comprising radially from outside to inside a shell forming a rear cone (29) for the ejection of gases coming the fans (14, 15) and the slow-speed turbines (10, 11), a double shell (30, 31) fitted with a downstream bend (4a) and forming the intermediate upstream-downstream duct between the drum (21) and the high-pressure compressor (5), and containing the gas generator consisting, from the rear to the front, of the HP compressor (5), the combustion chamber (6) and the HP (7) and LP (8) turbines, the LP turbine being coupled by the central LP turbine shaft (16) of the first rotor set (1A) of the LP compressor.

8. Engine in accordance with Claim 2, characterised in that the HP body comprises at the rear the HP compressor (5) coupled by a central shaft (35) to the HP turbine (7) placed upstream, and in that, at the entry to the HP compressor (5) it comprises a rearjournal (36) extended towards the rear and fitted with a gear driving the pinions of an equipment bracket (38), the said bracket being placed within the downstream cone (29).

9. Engine in accordance with Claim 8, characterised in that the HP body is centred upstream on a bearing (39) placed between an upstream structural member (40) of the central body (13) and an upstream journal (41) and at the rear, on a bearing (42) placed between a downstream structural member (43) of the central body and the rear journal (36).

10. Engine in accordance with any of Claims 5 to 9, characterised in that the stationary upstream structure (24) and the rear central body are joined together by an outer shell (28) and are linked by a double suspension pylon (46, 47) attached to the wing (50) of an aircraft.

11. Engine in accordance with Claim 10 suspended from the wing (50) of an aircraft, characterised in that it is suspended in cantilever fashion under the wing, the fans (14, 15) being sited ahead of the wing of the aircraft.

12. Engine in accordance with Claim 11, characterised in that the fans (14, 15) are shrouded.

13. Engine in accordance with Claim 12, characterised in that the trailing edge of the shroud (52) of the rear fan (15) is situated in a plane upstream of the leading edge of the wing (50) of the aircraft and in that the engine is suspended at a height such that the shrouds of the fans are situated beneath the lowest point of the underside of the wing of the aircraft.
